# EUROPEAN PATENT APPLICATION

(11) **EP 3 015 977 A1**
(43) Date of publication of application: **04.05.2016**
(21) Application number: 14306730.4
(22) Date of filing: 29.10.2014
(51) Int. Cl.: G06F 9/44

(54) **Rendering a user interface**

(71) Applicant: Hewlett-Packard Development Company, L.P., Houston, TX 77070 (US)
(72) Inventor: Picard, Jean-Charles, 06901 Sophia Antipolis (FR); El-Ferachi, Anas, 06901 Sophia Antipolis (FR)
(74) Representative: Samson & Partner Patentanwälte mbB

(57) **Abstract**

Techniques for rendering user interfaces are disclosed. A user interface is generated for display. The user interface has an arrangement of visual components defined by a layout. The visual components include a proxy component linked to a further visual component. Subsequent to generating the user interface, the linked further visual component is rendered in place of the proxy component in the user interface.

## Description

### BACKGROUND

User interfaces such as Graphical User Interfaces (GUIs) have become an accepted way of interacting with computer systems. One way of providing a user interface is providing a definition that is renderable by a client computer system in a web browser or other environment such as JAVA (RTM). A web browser on a client computer system receives communications from remote systems such as a web page that can be rendered by the web browser. Web pages can be written in different languages and may be defined by markup language such as hypertext markup language, HTML, and cascaded style scripts, CSS. Web pages may also include media such as images, sound clips and video and executable code such as Javascript.

Web pages can be static or dynamic. A static web page is written and then stored in a location on a web server to be served to a client computing device when required. A dynamic web page is generated when needed, for example by obtaining data from a database and using it to produce a web page.

### BRIEF DESCRIPTION OF THE DRAWINGS

The accompanying drawings illustrate various examples and are a part of the specification. The illustrated examples are examples and do not limit the scope of the claims. Throughout the drawings, identical reference numbers designate similar, but not necessarily identical elements.
FIG. 1 is a block diagram of an example system to serve a renderable user interface to a client computing device which may make use of the present disclosure;
FIG. 2 is a block diagram of aspects of an example user interface definition which may be served by the system of FIG 1;
FIG. 3 is a block diagram of an example system to serve a renderable user interface to a client computing device;
FIG. 4 is a flow diagram illustrating an example method of rendering a user interface;
FIG. 5 is a flow diagram illustrating an example method of rendering a user interface;
FIG. 6 is a flow diagram illustrating an example method of asynchronously rendering data from plural data sources in a user interface;
FIGs 7a, 7b and 7c are diagrams illustrating an example of rendering aspects of a user interface;
FIG. 8 is an illustration of a rendered web page populated with data from a plurality of data sources;
FIG.9 is a flow diagram of an example of a process which may be employed to prepare a user interface for communication to a recipient computer for rendering; and,
FIG. 10 is a flow diagram illustrating an example user interface customization routine which may be incorporated into the flow diagram of FIG. 9.

### DETAILED DESCRIPTION

Increased flexibility can be achieved if components of a user interface can be populated in a layout around rendering time. Such a capability for defining a layout but deferring populating the layout with at least selected components until around the time of rendering forms the foundation of the present disclosure.

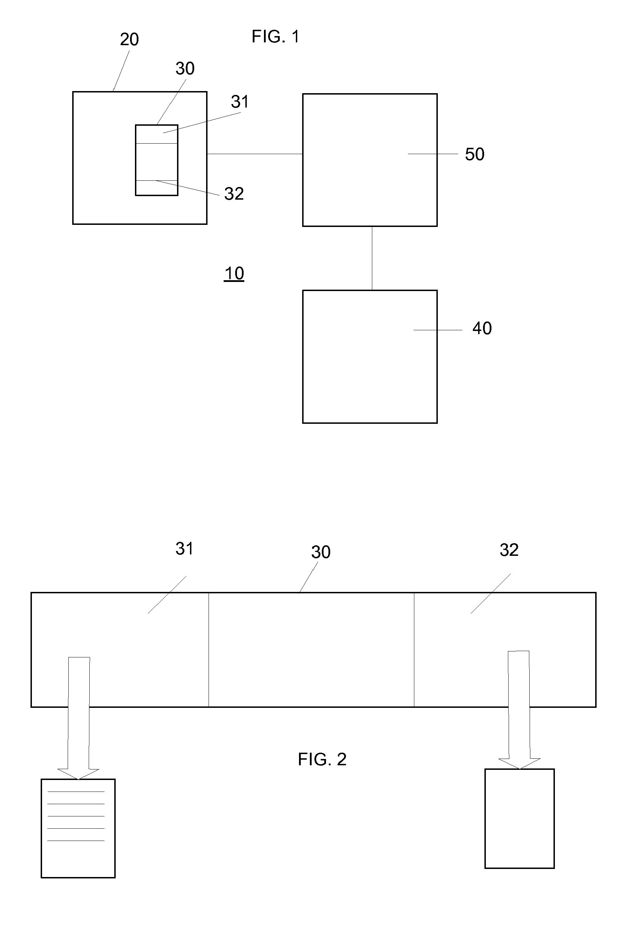

Generating a user interface based on a received user interface definition is popular with software developers and is a way of reducing the number and size of executable programs that must be installed and stored on a client computer system. FIG. 1 is a block diagram of an example system to serve a renderable user interface to a client computing device which may make use of the present disclosure.

FIG. 1 includes particular components, modules, etc. according to various examples. However, in different examples, more, fewer, and/or other components, modules, arrangements of components/modules, etc. may be used according to the teachings described herein. In addition, various components, modules, etc. described herein may be implemented as one or more electronic circuits, software modules, hardware modules, special purpose hardware (e.g., application specific hardware, application specific integrated circuits (ASICs), embedded controllers, hardwired circuitry, Field Programmable Gate Arrays (FPGA), etc.), or some combination of these.

As shown in FIG.1, in one example, the system 10 includes a first data repository 20 encoding a user interface definition 30, a network interface 40 to receive a request for the user interface from the client computing device and at least one processor 50 to execute computer program code to receive the request for the user interface from the network interface, and to access the first data repository 20 to serve the user interface definition 30 to the client computing device.

In one example, the user interface definition 30 identifies 31 a layout defining an arrangement for visual components for the user interface. The visual components in the arrangement include a proxy component. In one example, the user interface definition 30 identifies 32 a further visual component to be substituted for the proxy component in the user interface when the user interface definition 30 is rendered.

FIG. 2 is a block diagram of aspects of an example user interface definition which may be served by the system of FIG 1.

In one example, the user interface definition 30 includes an identifier 31 that links to a layout defining an arrangement for visual components for the user interface. The visual components in the arrangement include a proxy component. In one example, the user interface definition 30 includes an identifier 32 that links to a further visual component to be substituted for the proxy component in the user interface when the user interface definition 30 is rendered. In one example, the layout is written in a markup language. In one example, the layout is written to be rendered by a web browser. In one example, the layout is written in one or more of hypertext markup language (HTML), cascaded style scripts (CSS) and Javascript.

In one example, the arrangement is encoded to be adaptive to the viewing environment of the client computing device when rendered on the client computing device. In one example, the arrangement is encoded using responsive web design techniques. In one example, the arrangement is encoded to have a fluid layout when rendered on the client computing device such that components may be laid out differently depending on parameters of the client computing device such as display resolution, size and orientation. For example, components in one example may be laid out in a grid for a desktop PC type client computing device having a relatively large display area but in a single file column for a smart phone type client computing device having a limited width.

In one example, the layout may be designed and maintained separately to the user interface definition. In one example, the visual components are designed and maintained separately to the user interface definition. In this way, a user with limited knowledge can make useful changes to the user interface without needing to know, for example, anything about HTML or responsive design techniques and without risk of breaking a layout. For example, making a change to the further visual component to be substituted for the proxy component when the user interface is rendered can be done by making a simple change to the user interface definition 30 without touching HTML, CSS, or Javascript. Similarly, should the code of one of the further visual components be updated, in one example it would be taken into account the next time a user interface using that component is rendered without a change needing to be made to the user interface definition 30.

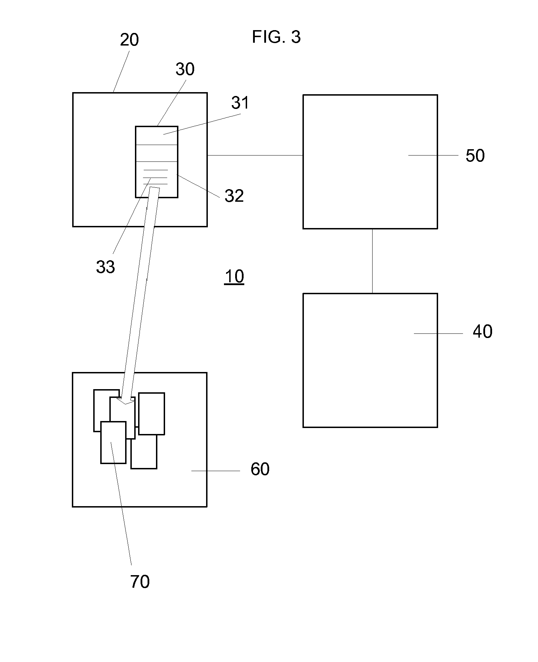

FIG. 3 is a block diagram of an example system to serve a renderable user interface to a client computing device which may make use of the present disclosure.

FIG. 3 includes particular components, modules, etc. according to various examples. However, in different examples, more, fewer, and/or other components, modules, arrangements of components/modules, etc. may be used according to the teachings described herein. In addition, various components, modules, etc. described herein may be implemented as one or more electronic circuits, software modules, hardware modules, special purpose hardware (e.g., application specific hardware, application specific integrated circuits (ASICs), embedded controllers, hardwired circuitry, Field Programmable Gate Arrays (FPGA), etc.), or some combination of these.

As shown in FIG.3, in one example, the system 10 includes a first data repository 20 encoding a user interface definition 30, a network interface 40 to receive a request for the user interface from the client computing device and at least one processor 50 to execute computer program code to receive the request for the user interface from the network interface, and to access the first data repository 20 to serve the user interface definition 30 to the client computing device.

In one example, the user interface definition 30 identifies 31 a layout defining an arrangement for visual components for the user interface. The visual components in the arrangement include a proxy component. In one example, the user interface definition 30 identifies 32 a further visual component to be substituted for the proxy component in the user interface when the user interface definition 30 is rendered. In one example, the proxy component has dimensions corresponding to the further visual component.

In one example, the system 10 further comprises a second data repository 60 encoding a library 70 of visual components. In one example, the user interface definition 30 includes a reference 33 to the further visual component in the library 70. In one example, the reference is encoded to cause the client computing device to retrieve the further visual component from the library 70 when rendering the user interface.

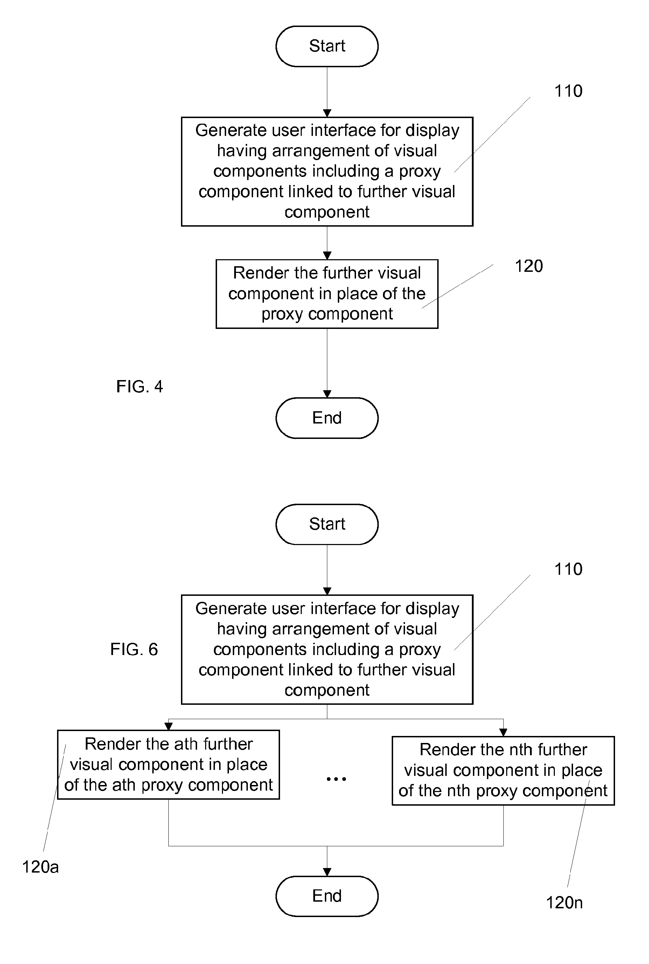

FIG. 4 is a flow diagram illustrating an example method of rendering a user interface.

Starting at step 110, a user interface is generated for display. In one example, the user interface has an arrangement of visual components defined by a layout, the visual components including a proxy component. In one example, the proxy component is linked to a further visual component.

Continuing at step 120, subsequent to generating the user interface, the linked further visual component is rendered in place of the proxy component in the user interface.

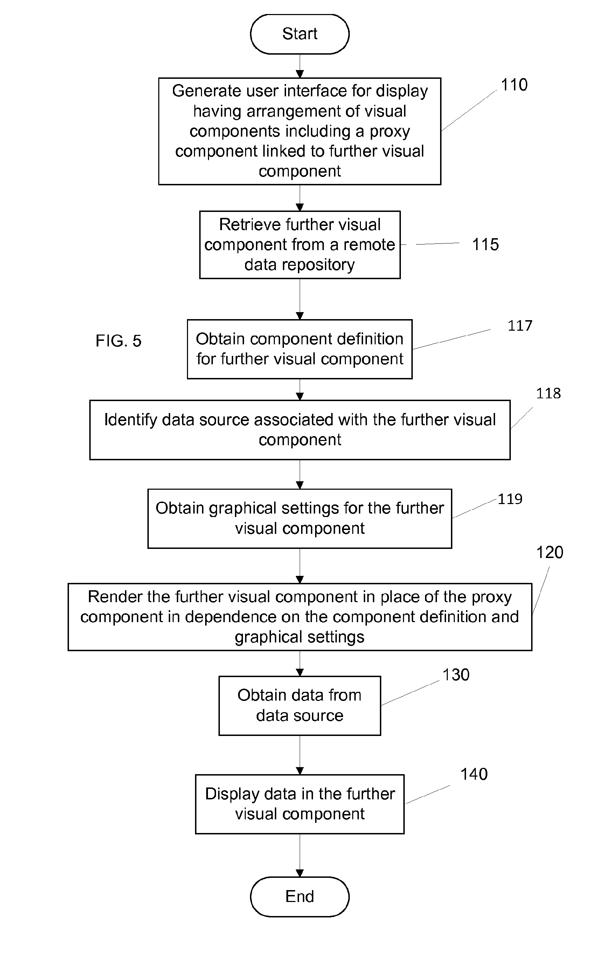

FIG. 5 is a flow diagram illustrating an example method of rendering a user interface.

Starting at step 100, in one example a user interface definition is received defining the layout and the further visual component.

Continuing at step 110, a user interface is generated for display in dependence on the received user interface definition. In one example, the user interface has an arrangement of visual components defined by a layout, the visual components including a proxy component.

In one example, at step 115 the further visual component is retrieved from a remote data repository. In another example, the further visual component may be retrieved from a local data repository or may be compiled or otherwise generated. In one example, the further visual component includes data on selected ones of a version of the further visual component, a description of the further visual component, an icon to be displayed for the further visual component and/or a name of the further visual component to be displayed.

At step 117, a component definition is obtained. In step 118, a data source associated with the further visual component is identified and in step 119, graphical settings for the component are obtained. In one example, generic types of further visual components are stored in the local or remote data repository (for example, widgets providing different types of graphs to display data) and these are customized (by linking the data source and applying graphical settings) to create the further visual component. In one example, the component definition identifies the data source and graphical settings. In one example, the component definition is written in a markup language. In one example, the component definition is written in JavaScript Object Notation (JSON) format or other markup such as XML.

In one example, the component definition includes selected ones of: an identifier for referencing the further visual component when rendered in the user interface; data to be selected from the data source (for example, particular fields, rows or columns of data from a data source or a calculation or other operation to be applied to data in the data source such as a time range or top or bottom N entries); and, a data filter to be applied to data retrieved from a data source (for example, only data on products of a particular brand or model).

In one example, the graphical settings include selected ones of title; colors; graph legend; graph axis labelling; and/or graph axis scale.

Continuing at step 120, subsequent to generating the user interface, the linked further visual component is rendered in place of the proxy component in the user interface in dependence on the component definition and graphical settings.

In one example, continuing art step 130, data is obtained from the data source and the data or a representation of the data is displayed, for example, in step 140 in the further visual component. In one example, the data may be displayed after the user interface has been rendered and displayed on the client computing device.

In one example, each of the further visual components are of a type selected from a group including: a component to display a visual representation of data; a selector component to receive a user input to change an attribute of another component; and, a group of further visual components to be rendered within the bounds of the respective proxy component.

The visual representation of data may, for example, be in the form of graphs, charts, tables or other visual representations. The visual representations may, for example, display one or more of the data, a summary of at least a part of the data and a statistical analysis of at least part of the data.

In one example, the layout includes non-proxy components selected from a set including as static text labels, buttons and graphics that are included in each user interface rendered based on the layout.

Where a user interface is dependent on data from a number of data sources, increased responsiveness can be achieved if separate components of the user interface can be populated and/or rendered independently. A capability for asynchronously populating and/or rendering at least selected components in the user interface also forms part of the present disclosure. FIG. 6 is a flow diagram illustrating an example method of asynchronously rendering data from plural data sources in a user interface.

Starting at step 110, a user interface is generated for display. In one example, the user interface has an arrangement of visual components defined by a layout, the visual components including a proxy component. In one example, the proxy component is linked to a further visual component and has dimensions corresponding to the further visual component.

In one example, the arrangement includes a plurality (n) of proxy components. In one example, for each of the n proxy components, a step 120a...120n is performed in respective of the proxy component and its linked further visual component to render the linked further visual component in place of the respective proxy component. In one example, each of steps 120a...120n is performed asynchronously with respect to others of the steps 120a...120n.

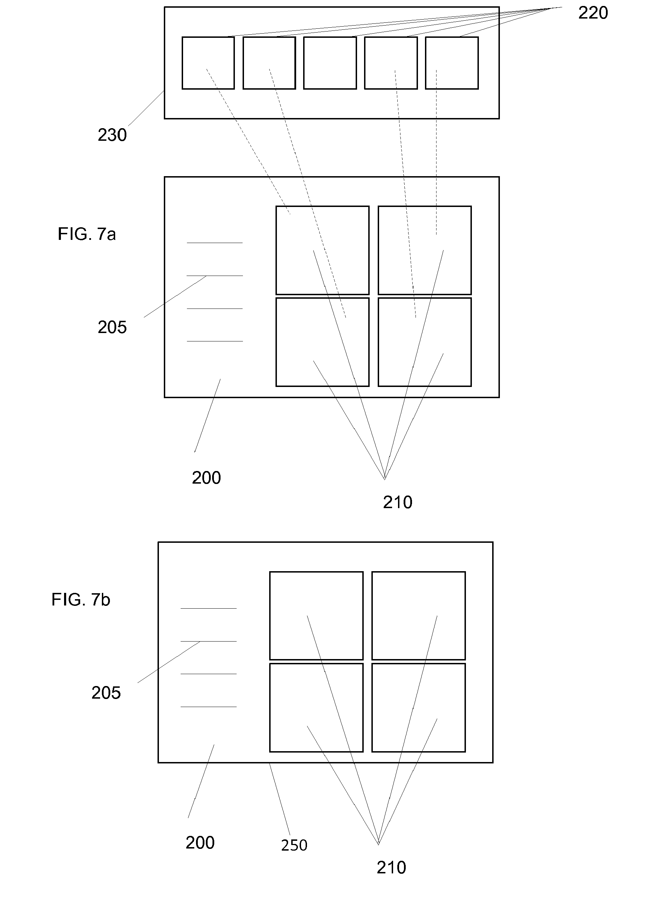

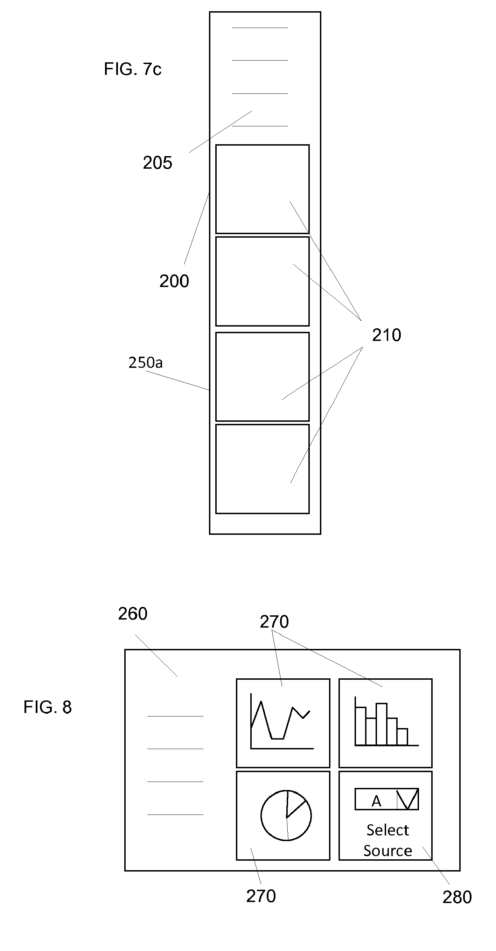

FIGs 7a, 7b and 7c are diagrams illustrating an example of rendering aspects of a user interface which may make use of the present disclosure.

FIG. 7a illustrates an example layout 200 including a plurality of proxy components 210 that are linked to corresponding visual components 220 in a remote data repository 230 (links are shown by dotted lines). In one example, the layout 200 includes further content 205. In one example, the further content 205 is static content such as text, graphics or user interface features such as buttons or selectors that are coded within the layout and will be displayed for each user interface rendered according to the layout.

FIGs 7b and 7c illustrate user interfaces 250 and 250a, rendered, respectively, in one example using the layout 200 for a desktop type display size and in another example for a tablet type display size. The position of the proxy components 210 is adjusted during the rendering to suit the display size.

FIG. 8 is an illustration of an example rendered web page having visual components populated with data from a plurality of data sources and a selector component for receiving user inputs to change the source of data displayed.

In the illustrated example, the web page 260 has been rendered from a user interface definition with proxy components positioned according to a layout identified by the user interface definition. Visual components 270 have then, in one example, been rendered in place of the proxy components. In one example, data is then retrieved from data sources and displayed by the visual components 270. In the illustrated example, a visual component 280 in the form of a selector component is injected into one of the proxy components and is arranged to receive user inputs to change the data displayed by the visual components 270.

In another example, data may be retrieved at the time of rendering the visual components 270.

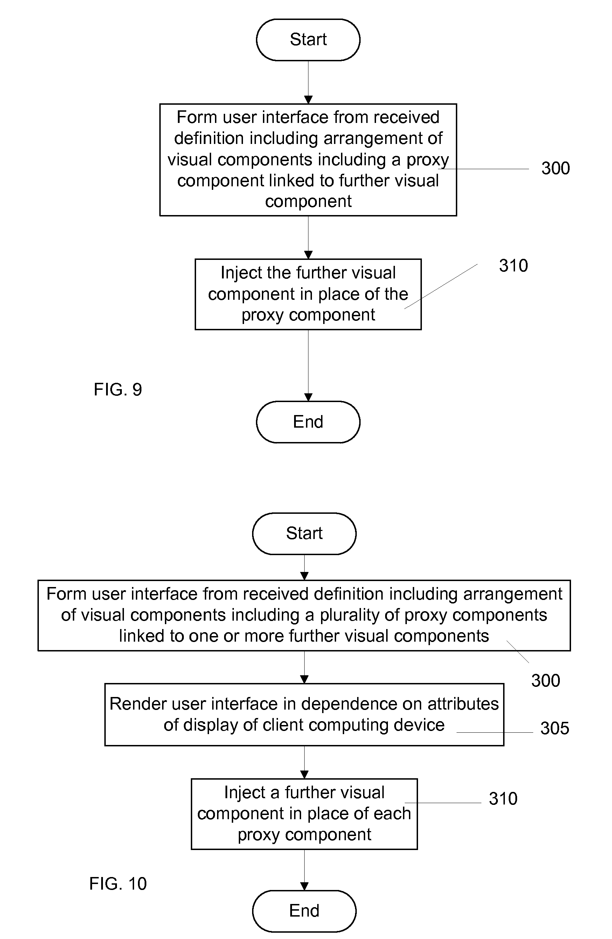

FIG. 9 is a flow diagram of an example of a process which may be employed to control rendering of a user interface.

Starting at block 300, a user interface is formed from a received user interface definition. The user interface definition, in one example, includes a layout for an arrangement of visual components, wherein the visual components include a proxy component, the user interface definition identifying a further visual component.

At block 310, the further visual component is injected in place of the proxy component in the user interface.

The functions and operations described with respect to, for example, the process which may be employed to control rendering of a user interface may be implemented as a computer-readable storage medium containing instructions executed by a processor and stored in a memory. Processor may represent generally any instruction execution system, such as a computer/processor based system or an ASIC (Application Specific Integrated Circuit), a Field Programmable Gate Array (FPGA), a computer, or other system that can fetch or obtain instructions or logic stored in memory and execute the instructions or logic contained therein. Memory represents generally any memory configured to store program instructions and other data.

FIG. 10 is a flow diagram illustrating an example of a process which may be employed to customize a user interface and which may be incorporated into the flow diagram of FIG. 9;

In one example, the arrangement includes a plurality of proxy components. In one example, at block 305, the user interface is rendered in dependence on attributes of the display of the client computing device and prior to injecting the further visual component(s) corresponding to the plurality of proxy components. In one example, the user interface is rendered with the proxy components in place so as to cause correct layout of the user interface for the client computing device.

In one example, at block 310, each further visual component is injected in place of the respective proxy component independently of other proxy components in the user interface.

Accordingly, various examples described herein were developed to provide methods, computer-readable media, and systems for defining and rendering user interfaces. One method for rendering a user interface includes generating a user interface for display, the user interface having visual components defined by a layout, wherein the visual components include a proxy component, the proxy component being linked to a further visual component; and, subsequent to generating the user interface, rendering the linked further visual component in place of the proxy component in the user interface.

Examples described herein may enable user interfaces to be defined in the form of a layout that refers to proxy components. A visual user interface component is substituted in place of each proxy component during rendering of the user interface. The visual user interface components need not be accessible or finalized when the layout is created but the layout nevertheless can be designed and maintained, taking into account the size and expected relative positions of the visual components.

The visual user interface component can be populated with data from a data source during rendering of the user interface. Such a process can be performed independently of rendering/substituting other visual user interface components enabling the rendering of the user interface to be asynchronous.

Various modifications may be made to the disclosed examples and implementations without departing from their scope. Therefore, the illustrations and examples herein should be construed in an illustrative, and not a restrictive, sense.

## Claims

1. A method of rendering a user interface comprising:
generating a user interface for display, the user interface having an arrangement of visual components defined by a layout, wherein the visual components include a proxy component, the proxy component being linked to a further visual component; and,
subsequent to generating the user interface, rendering the linked further visual component in place of the proxy component in the user interface.

2. The method of claim 1, wherein the step of rendering the linked further visual component includes retrieving the further visual component from a remote data repository.

3. The method of claim 1, further comprising, prior to the step of generating, receiving a user interface definition defining the layout and the further visual component.

4. The method of claim 1, further comprising, prior to the step of generating, obtaining a component definition and graphical settings for the further visual component and identifying a data source associated with the further visual component, the step of rendering being performed in dependence on the component definition and graphical settings.

5. The method of claim 4, further comprising obtaining data from the data source and displaying the data or a representation of the data in the further visual component.

6. The method of claim 1, wherein the arrangement includes a plurality of proxy components, the step of rendering the linked further visual component in place of the proxy component being asynchronously performed for each proxy component.

7. The method of claim 6, wherein each of the further visual components are of a type selected from a group including: a component to display a visual representation of data; a selector component to receive a user input to change an attribute of another component; and, a group of further visual components to be rendered within the bounds of the respective proxy component.

8. A system to serve a renderable user interface to a client computing device, the system comprising:
a first data repository encoding a user interface definition, the user interface definition identifying:
a layout defining an arrangement for visual components for the user interface, the visual components including a proxy component; and,
a further visual component to be substituted for the proxy component in the
user interface when the user interface definition is rendered;
a network interface to receive a request for the user interface from the client computing device;
at least one processor to execute computer program code to receive the request for the user interface from the network interface, and to access the first data repository to serve the user interface definition to the client computing device.

9. The system of claim 8, further comprising a second data repository encoding a library of visual components, wherein the user interface definition includes a reference to the further visual component in the library, the reference being encoded to cause the client computing device to retrieve the further visual component from the library when rendering the user interface.

10. The system of claim 8, wherein the layout is written in a markup language.

11. The system of claim 8, wherein the arrangement is encoded to be adaptive to the viewing environment of the client computing device when rendered on the client computing device.

12. A non-transitory computer-readable storage medium containing instructions to control rendering of a user interface, the instructions when executed by a processor causing the processor to:
form a user interface from a received user interface definition, the user interface definition including a layout for an arrangement of visual components, wherein the visual components include a proxy component, the user interface definition identifying a further visual component and the proxy component; and,
inject the further visual component in place of the proxy component in the user interface.

13. The non-transitory computer readable storage medium of claim 12, further comprising instructions when executed by a processor cause the processor to:
render the user interface for display on a display of a client computing device prior to injecting the further visual component.

14. The non-transitory computer readable storage medium of claim 13, further comprising instructions when executed by a processor cause the processor to:
render the user interface in dependence on attributes of the display of the client computing device.

15. The non-transitory computer readable storage medium of claim 12, wherein the arrangement includes a plurality of proxy components, the non-transitory computer readable storage medium further comprising instructions when executed by a processor cause the processor to:
inject each further visual component in place of the respective proxy component independently of other proxy components in the user interface.
